# EUROPEAN PATENT APPLICATION

(11) **EP 3 444 128 A1**
(43) Date of publication of application: **20.02.2019**
(21) Application number: 18188249.9
(22) Date of filing: 09.08.2018
(51) Int. Cl.: B60C 11/03, B60C 11/00

(54) **TIRE TREAD FOR OFF THE ROAD TIRES**

(30) Priority: 16.08.2017 US 201715678136
(71) Applicant: The Goodyear Tire & Rubber Company, Akron, OH 44316 (US)
(72) Inventor: WILSON, John David, Clinton, Ohio 44216 (US); DIXON, Max Harold, Kent, OH 44240 (US); LEWKOWICZ, Steven Z, South Euclid, OH 44121 (US); BACHOCHIN, Todd Andrew, Peninsula, OH 44264 (US)
(74) Representative: Kutsch, Bernd

(57) **Abstract**

A tread for a tire is disclosed. The tread (20) comprises a tread lug (100) extending in the circumferential direction of the tread (20) and in the lateral direction of the tread (20) and having a radially outer tread lug surface, the radially outer tread lug surface being a non-planar tread lug surface (110) having an asymmetric curvature in the lateral direction of the tread (20) such that a radially outermost point on the non-planar tread lug surface (110) is not located on an axis of symmetry or central axis of the tread lug (100).

## Description

### Field of the Invention

The present invention relates to tire treads and tire, and in particular to off-the-road tires and treads for an off-the-road tire.

### Background of the Invention

A structure has been disclosed where a band-like rib is formed in the center of an outside periphery of a tire and where lugs are connected thereto and on both sides thereof diagonally with respect to a tire width direction. Meanwhile, the performance heretofore required for off the road tires, such as tractors and/or agricultural applications, has included traction performance in fields and low compaction performance for not damaging those fields. However, in recent years, efforts have been made to increase the speed at which these tires may travel on public/paved roads. This has led to heretofore unencountered challenges as these tires may perform and wear in unforeseen ways. For example, greater amounts of vibration at higher speeds may not be acceptable.

One conventional tire may include lug blocks that are disposed in a tread portion and are formed alternately on both sides of a tire equatorial plane in a tire circumferential direction and a central rib that extends in the tire circumferential direction at a tire width direction central portion of the tread portion and to which end portions of the lug blocks on the tire equatorial plane side are integrally connected. The lug blocks and the central rib may be integrally interconnected in the tread portion, and land portions may be continuously disposed. As compared to a tire with independent lug blocks and many edges in the central portion of the tread, the conventional tire may have fewer edges and fewer variations in tread gauge between the lug blocks accompanying heat shrinkage after vulcanization. Tire vibration during high-speed travel on paved roads may thereby be significantly reduced. In this way, the conventional tire may reduce vibration during high-speed travel on paved roads without lowering traction performance in fields.

### Summary of the Invention

The invention relates to a tire tread in accordance with claim 1 and to a tire in accordance with claim 11.

Dependent claims refer to preferred embodiments of the invention.

A tread for a tire in accordance with a preferred aspect of the present invention includes a plurality of circumferential rows extending around a radially outer portion of the tire. Each row defines a plurality of tread lugs. Each tread lug has a radially outer surface. The radially outer surfaces have an asymmetric curvature such that a radially outermost point on each surface is not located on an axis of symmetry of each tread lug.

According to another preferred aspect of the tread in accordance with the invention, the asymmetric curvature is defined by a non-constant radius of curvature.

According to another preferred aspect of the tread in accordance with the invention, each tread lug has inclined planar sidewalls defining a radial height of the tread lug and each sidewall is inclined at a different angle than an opposite sidewall of the tread lug.

According to another preferred aspect of the tread in accordance with the invention, the plurality of circumferential rows includes a center row symmetric about a centerplane of the tread.

According to another preferred aspect of the tread in accordance with the invention the plurality of circumferential rows includes a shoulder row having tread lugs separated by lateral grooves.

According to another preferred aspect of the tread in accordance with the invention, the plurality of circumferential rows includes a first row of lugs extending from a lateral tread edge of the tread axially inward to a row of first sipes.

According to another preferred aspect of the tread in accordance with the invention, the plurality of circumferential rows includes adjacent the first sipes, a second row of lugs axially located between the first row of lugs, a third row of lugs, and a fourth row of lugs.

According to another preferred aspect of the tread in accordance with the invention, a shape of the lugs of the second row of lugs is defined by the first sipes, a first row of lateral grooves, a row of second sipes, a row of third sipes, and a second row of lateral grooves.

According to another preferred aspect of the tread in accordance with the invention, the row of second sipes is inclined alternately with equal, but opposite angles.

According to another preferred aspect of the tread in accordance with the invention, the row of third sipes is disposed coincidently on a centerplane of the tread.

### Definitions

The following definitions are controlling for the disclosed invention.

"Axial" and "Axially" means the lines or directions that are parallel to the axis of rotation of the tire.

"Axially Inward" means in an axial direction toward the equatorial plane. "Axially Outward" means in an axial direction away from the equatorial plane.

"Carcass" means the tire structure apart from the belt structure, tread, undertread over the plies, but including the beads.

"Circumferential" means circular lines or directions extending along the perimeter of the surface of the annular tread perpendicular to the axial direction; it can also refer to the direction of the sets of adjacent circular curves whose radii define the axial curvature of the tread, as viewed in cross section.

"Directional Tread Pattern" means a tread pattern designed for specific direction of rotation.

"Equatorial Plane" means the plane perpendicular to the tire's axis of rotation and passing through the center of its tread; or the plane containing the circumferential centerline of the tread.

"Footprint" means the contact patch or area of contact of the tire tread with a flat surface under normal load pressure and speed conditions.

"Groove" means an elongated void area in a tread that may extend circumferentially or laterally in the tread in a straight, curved or zigzag manner. It is understood that all groove widths are measured perpendicular to the centerline of the groove.

"Lateral" means a direction going from one sidewall of the tire towards the other sidewall of the tire. The lateral direction is parallel to the axial direction.

"Net to gross" means the ratio of the net ground contacting tread surface to the gross area of the tread including the ground contacting tread surface and void spaces comprising grooves, notches and sipes.

"Radial" and "radially" mean directions radially toward or away from the axis of rotation of the tire.

"Shoulder" means the upper portion of sidewall just below the tread edge.

"Sidewall" means that portion of a tire between the tread and the bead.

"Sipe" means a groove having a width in the range of 0.2% to 0.8% of the tread width. Sipes are typically formed by steel blades having a 0.4 to 1.6 mm, inserted into a cast or machined mold.

"Tangential" and "Tangentially" refer to segments of circular curves that intersect at a point through which can be drawn a single line that is mutually tangential to both circular segments.

"Tread" means the ground contacting portion of a tire.

"Tread width" (TW) means the greatest axial distance across the tread, when measured (using a footprint of a tire,) laterally from shoulder to shoulder edge, when mounted on the design rim and subjected to a specified load and when inflated to a specified inflation pressure for said load.

"Void Space" means areas of the tread surface comprising grooves, notches and sipes.

### Brief Description of the Drawings

The present invention will be more clearly understood by the following description of some examples thereof, with reference to the accompanying drawings, in which:
FIG. 1 is a schematic orthogonal view of a tire for use with the present invention;
FIG. 2 is a schematic perspective detail view of part of a tread for use with the present invention; and
FIG. 3 is a schematic sectional view of a tread lug in accordance with the present invention.

### Description of Example Embodiments of the Present Invention

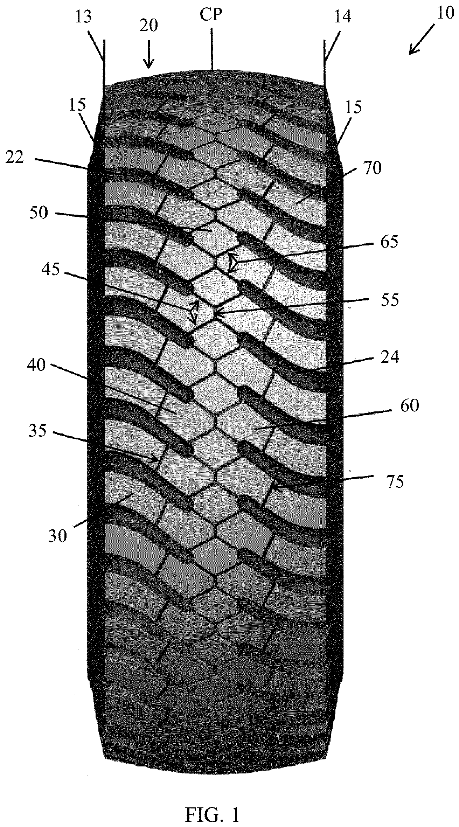

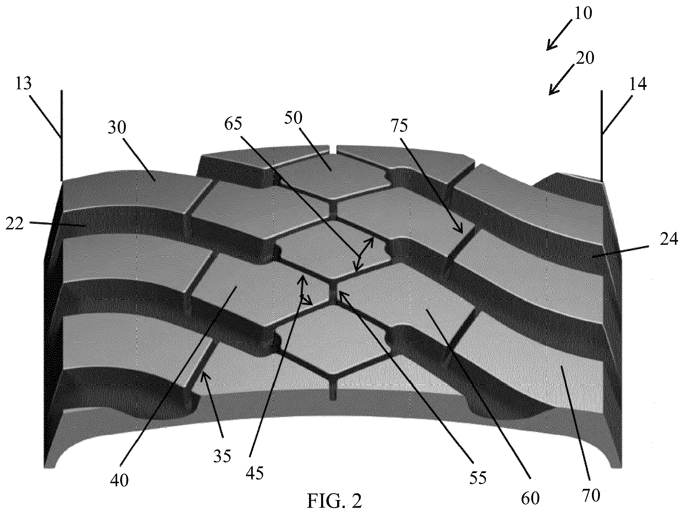

FIGS. 1-2 show an example pneumatic tire 10 for use with the present invention. The tire 10 for instance has an example nominal rim diameter of 889 mm (35 inches) or more. The tire 10 has an outer ground engaging tread 12 which terminates in axially outer lateral edges 13, 14. Sidewall portions 15 extend radially inward from the tread lateral edges 13, 14 and terminate in a pair of bead regions having an annular bead core (not shown). The tire 10 may further include other structures and components known to those skilled in the art.

The tread 12 may have a non-directional tread pattern.

The tread 12 includes two rows of inclined shoulder grooves 22, 24. Each row of shoulder grooves 22, 24 extends laterally and circumferentially from a respective lateral tread edge 13, 14 towards a centerplane CP of the tread 12. The shoulder grooves 22, 24 preferably do not extend past the centerplane CP of the tread 12. The shoulder grooves 22 in the first row are preferably circumferentially offset or staggered from the shoulder grooves 24 in the second row. The shoulder grooves 22 in the first row are preferably similarly shaped as the shoulder grooves 24 in the second row and preferably have an angular orientation at about 180 degrees opposite that the shoulder grooves 24 in the second row.

The example tread 12 is divided into five rows of lugs. A first row of shoulder lugs 30 extends from the lateral tread edge 13 axially inward to a row of first sipes 35. Adjacent the first sipes 35, a second intermediate row of lugs 40 is axially located between the first row of lugs 30, a third center row of lugs 50, and a fourth intermediate row of lugs 60. The second intermediate row of lugs 40 is bordered by the first sipes 35, one of the first row of lateral grooves 22, a row of second sipes 45, a row of third sipes 55, and another of the first row of lateral grooves 22. The row of second sipes 45 is inclined alternately with equal, but opposite angles. The row of third sipes 55 is preferably disposed coincidently on the centerplane CP of the tire 10.

The third center row of lugs 50 is preferably axially located between the second intermediate row of lugs 40 and the fourth intermediate row of lugs 60. The third center row of lugs 50 is preferably disposed symmetrically about the centerplane CP and is preferably bordered by the seconds sipes 45, third sipes 55, and a row of fourth sipes 65. The row of fourth sipes 65 is preferably inclined alternately with equal, but opposite angles and these angles may each be opposite the angles of the circumferentially adjacent row of second sipes 45. As shown in FIG. 1, each lug 50 is thereby defined by one of the first row of lateral grooves 22, one of the second row of lateral grooves 24, two adjacent and opposite second sipes 45, and two opposite and adjacent fourth sipes 65.

The fourth intermediate row of lugs 60 is axially located between the second intermediate row of lugs 40, the third center row of lugs 50, and a fifth shoulder row of lugs 70. The fourth intermediate row of lugs 60 is bordered by the third sipes 55, the fourth sipes 65, one of the second row of lateral grooves 24, a row of fifth sipes 75, and another one of the second row of lateral grooves 24. The row of fifth sipes 75 is preferably inclined at the same angle as the first sipes 35. As shown in FIG. 1, each lug 60 is thereby defined by one of the second row of lateral grooves 24, another one of the second row of lateral grooves 24, two adjacent and opposite fourth sipes 65, and a fifth sipe 75. The fifth row of shoulder lugs 70 extend from the lateral tread edge 14 axially inward to the fifth sipes 75.

The shoulder grooves preferably have a depth of between 70 percent to 100 percent of a non-skid tread depth, or NSK, of the tread 12. The shoulder grooves 22, 24 are preferably angled between 30 degrees to 60 degrees or between 40 degrees to 50 degrees relative the centerplane CP of the tire 10. These grooves 22, 24 may thereby provide forward, rearward, and lateral traction. The first sipes 35, second sipes 45, third sipes 55, fourth sipes 65, and fifth sipes 75 preferably have depths varying between from 50 percent NSK to 80 percent NSK.

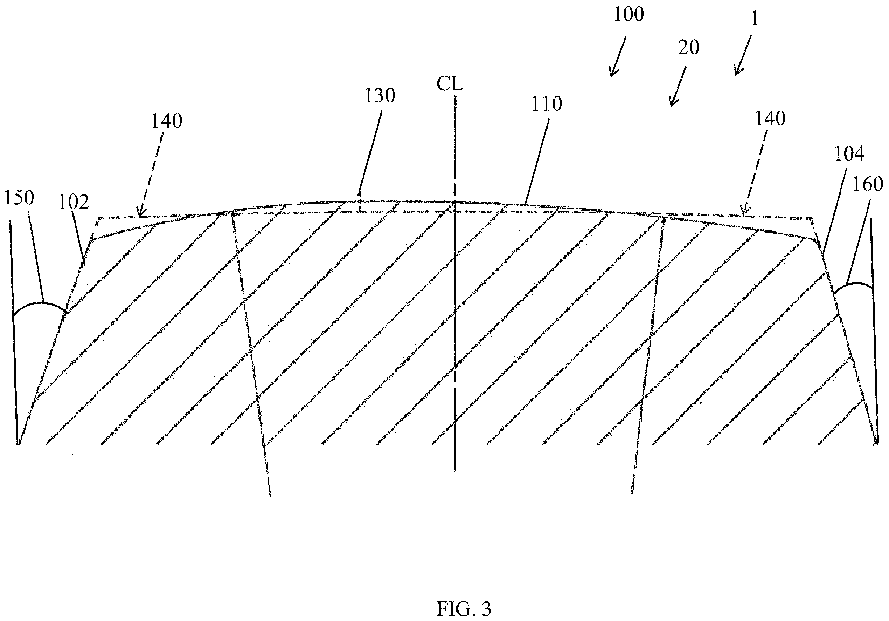

In accordance with the present invention, FIG. 3 shows a cross-section of a tread lug 100 (cut in parallel to the radial direction and extending in parallel to the axial direction), which may be any tread lug including those 30, 40, 50, 60, 70 described above. The tread lug 100 includes non-planar contact surface 110 for engaging a terrain for the tire 1. The surface, or crown 110, of the tread lug 100 is not symmetrical about a centerline CL of the tread lug, as viewed in FIG. 3. The centerline CL is the line parallel to the radial direction and perpendicular to the axial or lateral direction of the tire or the tire tread and is located in the middle between the two respective radially and axially outermost tread lug edges. As a result, the radially outermost point 130, or tangency point, is not be located on the centerline CL in this view and/or any centerline of any other elevation view of the tread lug 100. The nonsymmetric curvature thus has different and/or varying radii of curvature at different points on the surface 110 when moving across the tread lug in the axial or lateral direction. A conventional planar lug surface 140 is shown in phantom. In the view of FIG. 3, the radially outer most point 130 is preferably a single point, not every point of the fully defined plane of the conventional surface 140. In order to compensate for this asymmetric curvature of the tread lug surface 110, opposite sidewalls 102, 104 of the tread lug 100 preferably have differing angles of inclination, 150, 160, respectively, i.e. the angle 150 may not equal the angle 160. Preferably the angles of inclination differ by 3 to 10 degrees.

A tread lug surface 110 in accordance with the invention relieves pressure at the edges of the tread lug 100 and relocate forces towards the radially thicker portions of the tread lug surface, such as the points on the tread lug surface 110 radially above the conventional planar lug surface 140. This leads to a beneficial pressure distribution and to an improved tire wear behavior, in particular of off-the-road applications.

## Claims

1. A tread for a tire comprising a tread lug (100) extending in the circumferential direction of the tread (20) and in the lateral direction of the tread (20) and having a radially outer tread lug surface, the radially outer tread lug surface being a non-planar tread lug surface (110) having an asymmetric curvature in the lateral direction of the tread (20) such that a radially outermost point on the non-planar tread lug surface (110) is not located on an axis of symmetry or central axis of the tread lug (100).

2. The tread as set forth in claim 1 wherein the asymmetric curvature is defined by a non-constant radius of curvature.

3. The tread as set forth in claim 1 or 2 wherein the tread lug (100) has inclined planar sidewalls (102, 104) defining a radial height of the tread lug (100), one of said sidewalls (102) being inclined versus the radial direction at a different angle than an the opposite of said sidewalls (104) of the tread lug (100).

4. The tread as set forth in claim 1, 2 or 3 comprising a plurality of circumferential rows of tread lugs (100) extending around a radially outer portion of the tread (20), each row comprising a plurality of tread lugs (100).

5. The tread as set forth in claim 4 wherein the plurality of circumferential rows includes a center row symmetric about a centerplane (CL) of the tread (20) comprising tread lugs (100) and/or one or more shoulder rows having comprising tread lugs (100) separated by lateral grooves.

6. The tread as set forth in claim 4 or 5 wherein the plurality of circumferential rows includes a first row of tread lugs (100) extending from a lateral tread edge of the tread (20) axially inward to a row of first sipes.

7. The tread as set forth in claim 6 wherein the plurality of circumferential rows includes adjacent the first sipes, a second row of tread lugs (100) axially located between the first row of tread lugs (100), a third row of tread lugs (100), and a fourth row of tread lugs (100).

8. The tread as set forth in claim 7 wherein a shape of the tread lugs (100) of the second row of tread lugs (100) is defined by the first sipes, a first row of lateral grooves, a row of second sipes, a row of third sipes, and a second row of lateral grooves.

9. The tread as set forth in claim 8 wherein the row of second sipes is inclined alternately with respect to the circumferential direction with equal, but opposite angles.

10. The tread as set forth in claim 9 wherein the row of third sipes is disposed coincidently on a centerplane (CL) of the tread (20).

11. A tire (1) comprising a tread (20) in accordance with at least one of the previous claims.

12. The tire of claim 11 wherein the tire is a pneumatic or a non-pneumatic off-the-road tire.
